# EUROPÄISCHE PATENTSCHRIFT

(11) **EP 2 150 092 B1**
(45) Veröffentlichungstag und Bekanntmachung des Hinweises auf die Patenterteilung: **21.11.2012**
(21) Anmeldenummer: 09164746.1
(22) Anmeldetag: 07.07.2009
(51) Int. Cl.: H05B 6/80, A61C 13/20

(54) **Vorrichtung zur Erwärmung von Formteilen, insbesondere dentalkeramischen Formteilen**
Device for heating moulded parts, in particular of ceramic, moulded dental parts
Dispositif de chauffage de pièces de formage, notamment de pièces de formage en céramique dentaire

(30) Priorität: 29.07.2008 DE 102008035235
(43) Veröffentlichungstag der Anmeldung: 03.02.2010
(73) Patentinhaber: Ivoclar Vivadent AG, 9494 Schaan (LI)
(72) Erfinder: Laubersheimer, Jürgen Dr., CH-9470 Buchs (CH); Jussel, Rudolf, AT-6806 Feldkirch-Tosters (AT); Lautenschläger, Werner, CH-9435 Heerbrugg (CH); Werling, Christian, DE-88131 Lindau (DE)
(74) Vertreter: Baronetzky, Klaus

(56) Entgegenhaltungen:
- US-A1- 2002 168 283
- US-A1- 2007 023 971

## Beschreibung

Die Erfindung betrifft eine Vorrichtung zur Erwärmung von Formteilen, insbesondere dentalkeramischen Formteilen, in einem Mikrowellenofen, gemäß dem Oberbegriff von Anspruch 1.

Ein derartiger Ofen ist beispielsweise aus der EP 1 060 713 A1 bekannt. Bei einem derartigen Ofen werden Dentalkeramiken Mikrowellenstrahlung ausgesetzt, wobei auch Suszeptoren eingesetzt werden können, die die Mikrowellenstrahlung aufnehmen und sich hierdurch aufheizen, wodurch das dentale Formteil ebenfalls aufgeheizt wird.

Die Festigkeit einerseits und die Elastizität andererseits von Dentalkeramiken hängt in starkem Maße von der thermischen Behandlung, insbesondere von der Brenn- bzw. Sinterkurve ab. Während mit einer üblichen Infrarotheizung beaufschlagte Dentalkeramiken typischerweise von außen nach innen sintern, nachdem die abgegebene Wärme durch Wärmestrahlung oder Konvektion dem dentalen Formteil von außen zugeleitet wird, haben Mikrowellen den Vorteil, dass sie dem Grunde nach auch geeignet sind, ein dentales Formteil von innen her aufzuheizen.

Andererseits besteht bei einem handelsüblichen Mikrowellenofen typischerweise der Nachteil, dass ein starker lokaler Temperaturgradient besteht, weswegen auch bei recht einfachen Mikrowellenöfen Drehteller eingesetzt werden, die entweder das zu erwärmende Gut oder die abgegebene Mikrowellenstrahlung rotieren lassen, um so eine gewisse Vergleichmäßigung zu erzielen.

Aus der US 2007/023971 A1 und aus der US 2002/168283 A1 sind Mikrowellenöfen mit Suszeptoren bekannt, die ringförmig zueinander angebracht sind. Derartige Ringe wirken jedoch zusammen betrachtet lediglich wie ein entsprechend doppelt dicker Ring.

Es sind verschiedene Versuche unternommen worden, die Mikrowellenstrahlen in Dentalbrennöfen zu vergleichmäßigen. So sind auch für den Dentalbereich rotierende Drehteller vorgeschlagen worden, wobei die Überprüfungen ergeben haben, dass dennoch die Materialeigenschaften der gesinterten Formteile nicht ganz befriedigend sind.

Daher ist man bestrebt, die Gleichmäßigkeit der Erwärmung weiter zu verbessern. Hierzu ist es beispielsweise bereits vorgeschlagen worden, besonders dickwandige Suszeptoren einzusetzen, um eine insofern einen höheren Vergleichmäßigungseffekt zu erzielen. Hierdurch wird die Mikrowellenstrahlung in thermische Energie umgewandelt, die ihrerseits das Formteil oder die Formteile von deren Außenseite beaufschlagt, so dass diese Lösung eher einem Brennofen ähnelt, der in klassischer Weise thermisch betrieben wird, aber die Formteile je stets von außen nach innen erwärmt.

Bei einer derartigen Erwärmung entstehen jedoch zwangsläufig Temperaturgradienten, insbesondere da regelmäßig angestrebt wird, die Zykluszeit beim Brennen gering zu halten, also eine rasche Aufheizung und eine vergleichsweise rasche Abkühlung zu ermöglichen.

Demgegenüber liegt der Erfindung die Aufgabe zugrunde, eine Vorrichtung zur Erwärmung von Formteilen, insbesondere dentalkeramischen Formteilen, gemäß dem Oberbegriff von Anspruch 1 zu schaffen, die ein verbessertes Restaurationsergebnis ermöglicht, ohne dass eine Verlängerung der Zykluszeit erforderlich wäre, vorzugsweise die Zykluszeit verkürzt werden kann.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, einen Innenring und einen Außenring aus Suszeptoren um das Formteil herum aufzubauen, wobei das Formteil in dem so gebildeten Ringraum aufgenommen ist. Überraschend ergibt sich durch diese Maßnahme eine gleichmäßigere Erwärmung, was daran liegt, dass durch die großflächigen, aber vergleichsweise dünnwandigen Suszeptoren ein gewisser Anteil der Mikrowellenstrahlung in den Ringraum eindringt und insofern ein Gleichgewicht aus der durch die Suszeptoren abgegebenen Wärmestrahlung und Mikrowellenstrahlung erzeugt wird. Dieses Gleichgewicht führt zur gleichmäßigen Erwärmung des Formteils sowohl von innen als auch von außen, so dass der Temperaturgradient bei richtiger Auslegung von Innenring und Außenring stark reduziert ist, auch wenn mit einer vergleichsweise hohen Leistung und damit einer raschen Aufheizung gearbeitet wird.

In einer einfachen Ausführungsform sind sowohl Innenring als auch Außenring als hochkant stehende Ringe ausgebildet, zwischen denen sich der Ringraum erstreckt, wobei keiner der beiden Ringe vollständig geschlossen sein muss. In diesem Fall fließen weder im Innenring noch im Außenring nennenswerte Ströme, und beide Ringe wirken als passive Suszeptoren.

In vorteilhafter Ausgestaltung ist es jedoch auch möglich, die Ringe geschlossen auszubilden und aus einem temperaturfesten Halbleiter aufzubauen, der zugleich Suszeptor für Mikrowellenstrahlung ist. Bei dieser geschlossenen Ringform wird dann Mikrowellenstrahlung induziert und die induzierten Ströme wirken leistungsverbrauchend und setzten insofern Mikrowellenstrahlung zusätzlich in Wärme um. Hierbei wirkt der Halbleiter im Grunde zugleich als Ohm'scher Widerstand, der Verlustwärme abgibt.

Aufgrund des Ringraums ist es möglich, auch beim gleichzeitigen Brennen zahlreicher Formteile die Suszeptoren recht nahe an den Formteilen anzubringen, so dass die thermische Ankopplung besonders gut ist. Dies führt zu der erwünschten Vergleichmäßigung der Erwärmung aufgrund der kombinierten Wirkung der Wärmestrahlung und der Mikrowellenstrahlung, die je gegenläufige lokale Aufheizprofile haben.

Erfindungsgemäß besonders günstig ist es, dass die Mikrowellenstrahlung - auch ohne Drehteller - durch die vergleichsweise großen Wandflächen des sich für die Mikrowellenstrahlung als ringförmiger Suszeptor darstellenden Raums für die Aufnahme der Formteile in starkem Maße absorbiert werden kann, wobei es grundsätzlich möglich ist, einen Mikrowellen-Hybridofen zu verwenden, auch wenn dies aufgrund der guten Absorptioseigenschaften nicht unbedingt erforderlich ist. Aufgrund der Teiltransparenz der Suszeptoren für Mikrowellenstrahlung erfolgt dennoch eine Mikrowellenbeaufschlagung auch der Formteile, die dazu dient, das erwünschte thermische Gleichgewicht sicherzustellen.

In besonders günstiger Ausgestaltung sind die Höhe, aber auch die Durchmesser der Ringe, also des Innenrings und des Außenrings, Vielfache oder Teiler der Wellenlänge der Mikrowellenstrahlung, die von dem Mikrowellengenerator emittiert wird. Beispielsweise kann die Wellenlänge 1 der verwendeten Mikrowellenstrahlung 120mm betragen, und die Höhe sowohl des Innenrings als auch des Außenrings kann dann 120mm, 60mm oder 30mm betragen.

Es versteht sich, dass sowohl die Wellenlänge als auch dementsprechend die Generatorfrequenz des Mikrowellengenerators in weiten Bereichen an die Erfordernisse anpassbar ist, wobei es aus Kostengründen bevorzugt ist, Standard-Mikrowellengeneratoren mit einer Emissionsfrequenz von 2,45 GHz zu verwenden.

Bevorzugt sind die Ringe zueinander konzentrisch angeordnet und der sich zwischen ihnen erstreckende Formraum, also der Ringraum für die Aufnahme der Formteile, weist einen kreisringförmigen Boden auf, der zugleich der räumlichen Festlegung der Ringe zueinander dient, oder es sind einzelne Distanzhalter zur Festlegung der Lage der Ringe angebracht.

Als Suszeptoren können beliebige geeignete Materialien verwendet werden, die bereits bei niedrigen Temperaturen mikrowellenstrahlung-absorbierend wirken. Bevorzugt sind die Suszeptoren teil-absorbierend für Mikrowellenstrahlung, wozu ihre vergleichsweise geringe Wandstärke von höchstens wenigen Millimetern beiträgt. Die Suszeptoren können die Formteile dementsprechend nach der Art eines Gefäßes, also in geschlossener Form umgeben, wobei dennoch die Mikrowellenstrahlung in der gewünschten Weise dem betreffenden Formteil zugeleitet wird.

Anstelle dessen ist es aber auch möglich, Anschlüsse beispielsweise für die Zu- und Ableitung von Gasen in dem Suszeptor vorzusehen, wobei der kreisringförmige Suszeptor auch nach der Art eines zweiteiligen Gefäßes mit Deckel ausgebildet sein kann.

Als Materialien für die Ringe können verwendet werden: Siliziumkarbid, Titankarbid, Zirkonkarbid, Hafniumkarbid, Vanadiumkarbid, Tantalkarbid, Molybdänkarbid, Niobkarbid, Siliziumborid, Hafniumborid, Zirkoniumborid, Siliziumnitrid, Zirkoniumnitird, Calciumborid oder Mischungen dieser, aber auch beispielsweise in Kombination mit Al2O3, Si3N4 und/oder BaTi03.

Erfindungsgemäß besonders günstig ist es, wenn über den Boden des Suszeptors, der sich zwischen dem Innenring und dem Außenring erstreckt, eine gute Wärmeleitung sichergestellt ist, die gewährleistet, dass die von den Ringen absorbierte und in Wärmestrahlung umgewandelte Mikrowellenstrahlung den Formteilen zugeleitet wird. Hierzu ist es günstig, wenn die Ringe je mit dem Boden in thermischer Verbindung stehen.

Erfindungsgemäß ist es auch günstig, dass sich durch die kombinierte Zuleitung sowohl von thermischer Energie als auch von Mikrowellenenergie die Formteile rascher aufheizen lassen.

In einer weiteren vorteilhaften Ausgestaltung ist es vorgesehen, dass der Suszeptor einen Ringraum zwischen dem Innenring und dem Außenring aufspannt, dessen radiale Erstreckung im Wesentlichen gleichbleibend ist und insbesondere zwischen dem 0,5-fachen und dem 2-fachen des Durchmessers der Höhe der Ringe beträgt.

In einer weiteren vorteilhaften Ausgestaltung ist es vorgesehen, dass der Innenring und/oder der Außenring des Suszeptors elliptisch oder kreisförmig ausgebildet ist.

In einer weiteren vorteilhaften Ausgestaltung ist es vorgesehen, dass sowohl der Innenring als auch der Außenring je einen Querschnitt eines hochkant stehenden Rechtecks aufweisen, wobei die Höhe zwischen 20 und 120% des Durchmessers des Rings beträgt, bevorzugt zwischen 50 und 85% und insbesondere zwischen 65 und 75% des Durchmessers.

In einer weiteren vorteilhaften Ausgestaltung ist es vorgesehen, dass der Innenring und der Außenring ein insbesondere geschlossenes Gefäß als Wärmebehandlungskammer mit homogenen Temperaturfeld aufspannen, in welchem sich das oder die zu erwärmenden Formteile befinden, wobei das Gefäß insbesondere mindestens teilweise für Mikrowellenstrahlung durchlässig ist.

In einer weiteren vorteilhaften Ausgestaltung ist es vorgesehen, dass Innenring und Außenring als Suszeptor Mikrowellenstrahlung absorbieren und Wärmestrahlung vergleichmäßigt emittieren.

In einer weiteren vorteilhaften Ausgestaltung ist es vorgesehen, dass der Innenring und/oder der Außenring je einen geschlossenen Stromkreis bilden und insbesondere als Halbleiter ausgebildet sind.

In einer weiteren vorteilhaften Ausgestaltung ist es vorgesehen, dass der Suszeptor als Halbleiter ausgebildet ist, und an seiner Oberfläche eine Schutzschicht aus Siliziumdioxid aufweist, die auch elektrisch isolierend wirkt.

In einer weiteren vorteilhaften Ausgestaltung ist es vorgesehen, dass die ringförmigen Suszeptorelemente des Suszeptors gegeneinander elektrisch isoliert sind und insbesondere auf einer elektrisch isolierenden Oberfläche angeordnet sind.

In einer weiteren vorteilhaften Ausgestaltung ist es vorgesehen, dass jedes Suszeptorelement eine im Wesentlichen gleichmäßige Höhe und/oder Wandstärke aufweist, die insbesondere die Höhe des Formteils um ein Mehrfaches übersteigt.

In einer weiteren vorteilhaften Ausgestaltung ist es vorgesehen, dass mindestens ein Suszeptorelement kreissymmetrisch ausgebildet ist und insbesondere um seine Achse drehbar gelagert ist.

In einer weiteren vorteilhaften Ausgestaltung ist es vorgesehen, dass die Wanddicke eines Suszeptorelements ein Siebzigstel bis ein Vierzigstel der Wellenlänge I der Mikrowellenstrahlung beträgt, die der Mikrowellengenerator erzeugt, und insbesondere zwischen 1,8mm und 2,5mm dick ist.

In einer weiteren vorteilhaften Ausgestaltung ist es vorgesehen, dass die Höhe jedes Suszeptorelements teilergleich mit der Wellenlänge I des Mikrowellengenerators ist, insbesondere I-Halbe oder I-Viertel beträgt.

In einer weiteren vorteilhaften Ausgestaltung ist es vorgesehen, dass die Suszeptorelemente konzentrisch zueinander angeordnet sind und insbesondere einstückig miteinander verbunden sind.

In einer weiteren vorteilhaften Ausgestaltung ist es vorgesehen, dass die Suszeptorelemente über einen kreisringförmigen Boden oder über Distanzhalter miteinander verbunden sind.

In einer weiteren vorteilhaften Ausgestaltung ist es vorgesehen, dass zwischen den Suszeptorelementen ein kreisringförmiger Raum gebildet ist, der mit einem Kugelbett versehen ist, wobei die Kugeln des Kugelbetts insbesondere aus dichtgesintertem Zirkondioxid und/oder aus Al2O3 bestehen, und/oder dass der Raum Hohl-, Bruchkugeln, Pulver oder sog. Flakes aufweist.

Weitere Vorteile, Einzelheiten und Merkmale ergeben sich aus der nachfolgenden Beschreibung eines Ausführungsbeispiels der Erfindung anhand der Zeichnungen.

Es zeigen:
- Fig. 1: eine schematische Ansicht eines Details einer erfindungsgemäßen Vorrichtung zur Erwärmung von Formteilen in einer ersten Ausführungsform; und
- Fig. 2: eine perspektivische Ansicht des Details gemäß Fig. 1.

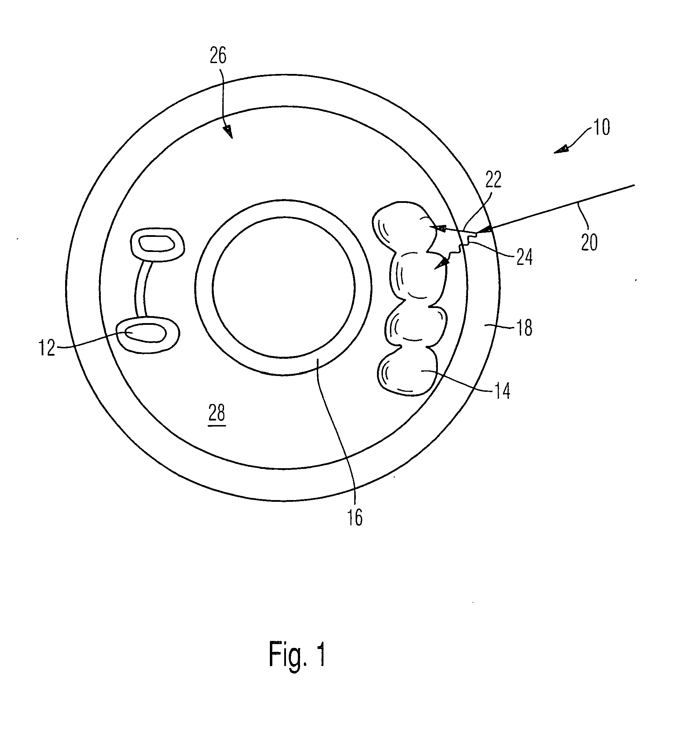

Fig. 1 zeigt eine schematische Ansicht einer erfindungsgemäßen Ausführungsform eines Details der Vorrichtung zur Erwärmung von dentalkeramischen Formteilen, wobei ein Formraum 10 dargestellt ist. Der Formraum 10 nimmt als im Wesentlichen ringförmiger Raum Formteile 12 und 14 auf. Es versteht sich, dass anstelle dessen auch eine beliebige andere Anzahl und Anordnung von Formteilen erfindungsgemäß verwendbar ist.

Der Formraum 10 weist zudem mindestens einen Innenring 16 und einen Außenring 18 auf. Er ist in einem nicht dargestellten Brennofen angeordnet, der von einem Mikrowellengenerator mit Mikrowellenstrahlung beauftragt wird.

Der Innenring 16 und der Außenring 18 erstrecken sich nach der Art von flachen Zylindern konzentrisch zueinander, wobei bei dem dargestellten Ausführungsbeispiel der Durchmesser des Innenrings 16 etwa ein Drittel des Durchmessers des Außenrings 18 beträgt. Die Höhe des Außenrings beträgt etwa die Hälfte seines Durchmessers, während in dem dargestellten Ausführungsbeispiel die Höhe des Innenrings 16 etwas geringer ist, wie es weiter unten erläutert ist.

Der Innenring 16 und der Außenring 18 sind bei dem bevorzugten Ausführungsbeispiel aus Siliziumkarbid ausgebildet und wirken insofern als Suszeptoren.

In dem dargestellten Ausführungsbeispiel sind sowohl der Innenring als auch der Außenring zylindrisch ausgebildet. Es versteht sich, dass es anstelle dessen ohne Weiteres möglich ist, dem Innenring und/oder dem Außenring eine kegelstumpfförmige Gestalt zu geben, oder beispielsweise eine einer Halbkugel angenäherte Form.

Auch ist es nicht erforderlich, dass die Ringe je in sich vollständig geschlossen sind. Dies gilt insbesondere, wenn vergleichsweise große Wandstärken für die Ringe verwendet werden, wobei durch eine oder mehrere entsprechende Ausnehmungen oder durch die Realisierung von Segmenten der Zutritt von Mikrowellenstrahlung zum Formteil erleichtert ist, wobei es sich versteht, dass eine geschlossene Ausgestaltung die Realisierung einer Induktionsspule ermöglicht.

Besonders günstig ist es andererseits, wenn durch jeden der Ringe je ein Stromkreis gebildet ist, denn die aufgebrachte Mikrowellenstrahlung induziert dann dort Ströme, die zusätzlich dazu beitragen, thermische Energie zu den Formteilen abzustrahlen.

Dies ist schematisch in Fig. 1 dargestellt, wobei die vom Mikrowellengenerator dem Formraum 10 zugeleitete Mikrowellenstrahlung durch den Pfeil 20 angedeutet ist. Der Pfeil 22 zeigt die von dem Außenring 18 als Suszeptor abgegebene Mikrowellenstrahlung, während der Pfeil 24 die von dem Suszeptor 18 an das Formteil 14 abgegebene Wärmestrahlung zeigt.

Beim Aufheizen des Dentalbrennofens wirken die Suszeptoren 16 und 18 in an sich bekannter Weise als Mikrowellenrezeptoren, während ein beispielsweise aus Zirkondioxid bestehendes Formteil 14 erst bei Temperaturen oberhalb von etwa 700°C ankoppelt und dann einfallende Mikrowellen absorbiert.

Bevorzugt ist, dass das Material, das für den Außenring 18 und den Innenring 16 verwendet wird, so beschaffen ist, dass es teiltransparent für Mikrowellen ist. Bevorzugt wird hierzu ein offenporiges Siliziumkarbid verwendet, das auch rekristallisiert sein kann und eine vergleichsweise grobe Kristallstruktur und eine raue Oberfläche aufweist. Die Porosität beträgt bevorzugt zwischen 5 und 15%, insbesondere etwa 10%, und die Dichte um 90%, wobei auch Werte zwischen 85 und 95% TD die erwünschten Wirkung zeitigen.

Es versteht sich, dass in einer modifizierten Augestaltung der erfindungsgemäßen Suszeptoren auch eine Porosität von bis zu 25% erfolgreich eingesetzt werden kann.

Siliziumkarbid ist einerseits chemisch inert und besitzt andererseits einen hohen dielektrischen Verlustfaktor. Erfindungsgemäß wird jedoch ebenfalls bevorzugt die Tatsache ausgenutzt, dass Siliziumkarbid auch ein Halbleiter ist. Die induzierten Ströme generieren damit eine elektrische Verlustleistung in dem materialspezifisch bestehenden Innenwiderstand des Suszeptors.

Bevorzugt weist der Innenring, aber auch der Außenring, eine ausgesprochen geringe Wandstärke auf, beispielsweise um 2mm. Bei einer derartigen Wandstärke ist die mechanische Festigkeit noch in ausreichendem Maße gegeben. Die Durchlässigkeit für die Mikrowellenstrahlung ist jedoch ebenfalls in der erwünschten Weise gegeben, und insbesondere ist der elektrische Widerstand höher als bei größeren Wandstärken.

Erfindungsgemäß besonders günstig ist sowohl das Formteil 12 als auch das Formteil 14 in dem Ringraum angeordnet, der zwischen dem Innenring 16 und dem Außenring 18 aufgespannt ist. Diese Anordnung erhöht überraschend signifikant die Gleichmäßigkeit der Temperaturverteilung bei der Erwärmung im Dentalbrennofen, der primär mit Mikrowellenstrahlung betrieben wird. Trotz der runden und insofern gleichmäßig beaufschlagbaren Gesamtausgestaltung des Formraums lassen sich die Formteile optimal auch mit thermischer Energie versorgen, die ausgleichend bei der Erwärmung der Formteile wirkt.

In der Ausführungsform gemäß Fig. 1 sind zwei Formteile 12 und 14 in dem Ringraum 26 zwischen dem Innenring 16 und dem Außenring 18 aufgenommen. Die Abmessungen sind so gewählt, dass auch die größten vorkommenden Dentalersatzteile in den Ringraum 26 aufgenommen werden können. Hierbei ist es besonders günstig, wenn einmal ein sehr großes, dem menschlichen Kiefer folgend ausgebildetes, also insofern im Wesentlichen U-förmiges Formteil gebrannt werden soll, dieses so eingelegt werden kann, dass es sich beidseitig des Innenrings 16 erstreckt.

Der Ringraum 26 ist bevorzugt mit einem Boden versehen, der aus dem gleichen Material wie die Ringe 16 und 18 besteht. Wenn Siliziumkarbid verwendet wird, lässt sich hierbei die Tatsache ausnutzen, dass die Oberfläche von Siliziumkarbid typischerweise zu Siliziumdioxid oxidiert, das elektrisch nicht leitend ist, so dass sich zwischen dem Innenring 16 und dem Boden 28 einerseits und dem Boden 28 und dem Außenring 18 andererseits eine Isolierung ergibt.

In der Ausführungsform gemäß Fig. 1 sind die Formteile 12 und 14 auf einem Kugelbett aufgenommen, das entweder aus Zirkondioxid-Kugeln bestehen kann, oder aus einem mikrowellen-transparenten Isolationsmaterial, wobei auch auch Al2O3 oder beispielsweise Si3N4 eingesetzt werden können.

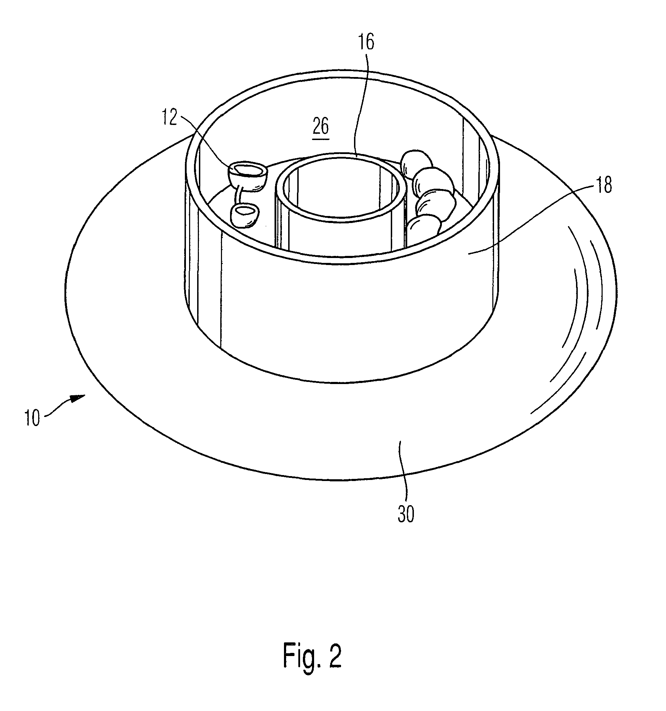

Die Ausführungsform gemäß Fig. 1 ist in Fig. 2 in perspektivischer Darstellung ersichtlich. Der Innenring 16 erstreckt sich gemäß Fig. 2 über eine etwas geringere Höhe als der Außenring 18. Ein hier nicht dargestellter Deckel lässt sich passgenau über dem Innenring 16 in den Außenring 18 einfügen, so dass sich in Verbindung mit dem Boden 28 ein geschlossener Ringraum 26 ergibt.

Der Querschnitt des Ringraums 26 ist im Wesentlichen quadratisch oder etwas hoch-rechteckig mit einem Höhen-Breiten-Verhältnis von 1,5 zu 1. Es versteht sich, dass die Abmessungen des erfindungsgemäßen Formraums 10 in weiten Bereichen an die Erfordernisse anpassbar sind. Auch ist es möglich, den erfindungsgemäßen Formraum 10 auf einem Drehteller 30 zu lagern, der eine noch verbesserte Vergleichmäßigung der Mikrowellenbeaufschlagung ermöglicht.

Durch die enge Anbindung des Dentalgerüsts an als Suszeptoren wirkenden Ringe 16 und 18 lässt sich die Aufheizzeit stark verkürzen, wobei in Versuchen eine Reduktion auf etwas weniger als die Hälfte gegenüber einem Mikrowellenofen gemäß dem Stand der Technik realisiert werden konnte.

## Patentansprüche

1. Vorrichtung zur Erwärmung von Formteilen, bestehend aus einem Mikrowellengenerator und einem Suszeptor, den er mit Mikrowellenstrahlung beaufschlagt, welcher Suszeptor zwischen einem in die Vorrichtung aufnehmbaren Formteil und dem Mikrowellengenerator angeordnet ist, wobei der Suszeptor mindestens teilweise sowohl einen Innenring (16) als auch einen Außenring (18) bildet und das Formteil (12, 14) zwischen Innenring (16) und Außenring (18) anordenbar ist.

2. Vorrichtung nach dem vorhergehenden Anspruch, **dadurch gekennzeichnet, dass** der Suszeptor einen Ringraum (26) zwischen dem Innenring (16) und dem Außenring (18) aufspannt, dessen radiale Erstreckung im Wesentlichen gleichbleibend ist und insbesondere zwischen dem 0,5-fachen und dem 2-fachen des Durchmessers der Ringe beträgt.

3. Vorrichtung nach einem der vorhergehenden Ansprüche, **dadurch gekennzeichnet, dass** der Innenring (16) und/oder der Außenring (18) des Suszeptors elliptisch oder kreisförmig ausgebildet ist.

4. Vorrichtung nach einem der vorhergehenden Ansprüche, **dadurch gekennzeichnet, dass** sowohl der Innenring (16) als auch der Außenring (18) je einen Querschnitt eines hochkant stehenden Rechtecks aufweisen, wobei die Höhe zwischen 20 und 120% des Durchmessers des Rings beträgt, bevorzugt zwischen 50 und 85% und insbesondere zwischen 65 und 75% des Durchmessers.

5. Vorrichtung nach einem der vorhergehenden Ansprüche, **dadurch gekennzeichnet, dass** der Innenring (16) und der Außenring (18) ein insbesondere geschlossenes Gefäß als Wärmebehandlungskammer mit homogenen Temperaturfeld aufspannen, in welchem sich das oder die zu erwärmenden Formteile (12, 14) befinden, wobei das Gefäß insbesondere mindestens teilweise für Mikrowellenstrahlung durchlässig ist.

6. Vorrichtung nach einem der vorhergehenden Ansprüche, **dadurch gekennzeichnet, dass** Innenring (16) und Außenring (18) als Suszeptor Mikrowellenstrahlung absorbieren und Wärmestrahlung vergleichmäßigt emittieren.

7. Vorrichtung nach einem der vorhergehenden Ansprüche, **dadurch gekennzeichnet, dass** der Innenring (16) und/oder der Außenring (18) je einen geschlossenen Stromkreis bilden und insbesondere als Halbleiter ausgebildet sind.

8. Vorrichtung nach Anspruch 7, **dadurch gekennzeichnet, dass** der Suszeptor als Halbleiter ausgebildet ist, und an seiner Oberfläche eine Schutzschicht aus Siliziumdioxid aufweist, die auch elektrisch isolierend wirkt.

9. Vorrichtung nach einem der vorhergehenden Ansprüche, **dadurch gekennzeichnet, dass** die ringförmigen Suszeptorelemente des Suszeptors gegeneinander elektrisch isoliert sind und insbesondere auf einer elektrisch isolierenden Oberfläche angeordnet sind.

10. Vorrichtung nach einem der vorhergehenden Ansprüche, **dadurch gekennzeichnet, dass** jedes Suszeptorelement eine im Wesentlichen gleichmäßige Höhe und/oder Wandstärke aufweist, die insbesondere die Höhe des Formteils (12, 14) um ein Mehrfaches übersteigt.

11. Vorrichtung nach einem der vorhergehenden Ansprüche, **dadurch gekennzeichnet, dass** mindestens ein Suszeptorelement kreissymmetrisch ausgebildet ist und insbesondere um seine Achse drehbar gelagert ist.

12. Vorrichtung nach einem der vorhergehenden Ansprüche, **dadurch gekennzeichnet, dass** die Wanddicke eines Suszeptorelements (16, 18) ein Siebzigstel bis ein Vierzigstel der Wellenlänge I der Mikrowellenstrahlung beträgt, die der Mikrowellengenerator erzeugt, und insbesondere zwischen 1,8mm und 2,5mm dick ist.

13. Vorrichtung nach einem der vorhergehenden Ansprüche, **dadurch gekennzeichnet, dass** die Höhe jedes Suszeptorelements (16, 18) teilergleich mit der Wellenlänge I des Mikrowellengenerators ist, insbesondere I-Halbe oder I-Viertel beträgt.

14. Vorrichtung nach einem der vorhergehenden Ansprüche, **dadurch gekennzeichnet, dass** die Suszeptorelemente (16, 18) konzentrisch zueinander angeordnet sind und insbesondere einstückig miteinander verbunden sind.

15. Vorrichtung nach einem der vorhergehenden Ansprüche, **dadurch gekennzeichnet, dass** die Suszeptorelemente (16, 18) über einen kreisringförmigen Boden (30) oder über Distanzhalter miteinander verbunden sind und/oder dass zwischen den Suszeptorelementen (16, 18) ein kreisringförmiger Raum (26) gebildet ist, der mit einem Kugelbett versehen ist, wobei die Kugeln des Kugelbetts insbesondere aus dichtgesintertem Zirkondioxid und/oder aus Al₂O₃ bestehen, und/oder dass der Raum (26) Hohl-, Bruchkugeln, Pulver oder sog. Flakes aufweist.

## Claims

1. Apparatus for the heating of moldings, consisting of a microwave generator and a susceptor which generator applies microwave radiation to the susceptor, said susceptor being arranged between the molding receivable in the apparatus and the microwave generator, wherein the susceptor at least partially forms both an inner ring (16) and an outer ring (18) and the molding (12, 14) can be arranged between the inner ring (16) and the outer ring (18).

2. Apparatus as claimed in claim 1, wherein the susceptor generates a ring space (26) between the inner ring (16) and the outer ring (18), the radial extension of which substantially remains constant and in particular amounts to between half (0.5) and double (2,0) the diameter of the rings.

3. Apparatus as claimed in one of the preceding claims, wherein the inner ring (16) and/or the outer ring (18) of the susceptor have an elliptical or circular shape.

4. Apparatus as claimed in one of the preceding claims, wherein both the inner ring (16) and the outer ring (18) each have a cross-section of an upright standing rectangle, the height amounting to between 20 and 120% of the diameter of the ring, preferably to between 50 and 85% and in particular to between 65 and 75% of the diameter.

5. Apparatus as claimed in one of the preceding claims, wherein the inner ring (16) and the outer ring (18) generate a container that is in particular closed as a thermal treatment chamber having a homogeneous temperature field, said container accommodating the one or more moldings (12, 14) that are to be heated and being particularly at least partially permeable to microwave radiation.

6. Apparatus as claimed in one of the preceding claims, wherein the inner ring (16) and the outer ring (18) as a susceptor absorb microwave radiation and emit thermal radiation in a homogenized manner.

7. Apparatus as claimed in one of the preceding claims, wherein the inner ring (16) and/or the outer ring (18) each form a closed circuit and are in particular embodied as semiconductors.

8. Apparatus as claimed in claim 7, wherein the susceptor is embodied as a semiconductor and has a protective layer of silicon dioxide applied on its upper surface that is also electrically insulating.

9. Apparatus as claimed in one of the preceding claims, wherein the ring-shaped susceptor elements of the susceptor are electrically insulated relative to one another and are in particular arranged on an electrically insulating surface.

10. Apparatus as claimed in one of the preceding claims, wherein each susceptor element has a substantially uniform height and/or wall thickness that in particular exceeds the height of the molding (12, 14) many times over.

11. Apparatus as claimed in one of the preceding claims, wherein at least one susceptor element has a circular-symmetric shape and is in particular pivot-mounted about its axis.

12. Apparatus as claimed in one of the preceding claims, wherein the wall thickness of a susceptor element (16, 18) amounts to a seventieth fraction to a fortieth fraction of the wavelength I of the microwave radiation generated by the microwave generator, and in particular has a thickness of between 1.8 mm and 2.5 mm.

13. Apparatus as claimed in one of the preceding claims, wherein the height of each susceptor element (16, 18) has a common factor with the wavelength I of the microwave generator, in particular is I /2 or I /4.

14. Apparatus as claimed in one of the preceding claims, wherein the susceptor elements (16, 18) are arranged in a concentric manner relative to one another and are in particular connected to each other integrally.

15. Apparatus as claimed in one of the preceding claims, wherein the susceptor elements (16, 18) are connected to each other by means of a circular ring-shaped bottom (30) or by means of a spacer and/or wherein a circular ring-shaped space (26) is generated between the susceptor elements (16, 18), said space (26) being provided with a bed of balls wherein the balls of the bed of balls in particular consist of densely sintered zirconium dioxide and/or Al₂/O₃, and/or wherein the space (26) comprises hollow balls, broken balls, powder or so-called flakes.

## Revendications

1. Dispositif de chauffage de pièces de formage, composé d'un générateur de micro-ondes et d'un suscepteur qu'il alimente en rayonnement micro-ondes, lequel suscepteur est disposé entre une pièce de formage pouvant être logée dans le dispositif et le générateur de micro-ondes, le suscepteur formant au moins partiellement aussi bien une bague intérieure (16) qu'une bague extérieure (18), et la pièce de formage (12, 14) pouvant être disposée entre la bague intérieure (16) et la bague extérieure (18).

2. Dispositif selon la revendication précédente, **caractérisé en ce que** le suscepteur définit un espace annulaire (26) entre la bague intérieure (16) et la bague extérieure (18), espace dont l'étendue radiale est essentiellement constante et est en particulier comprise entre la moitié et le double du diamètre des bagues.

3. Dispositif selon une des revendications précédentes, **caractérisé en ce que** la bague intérieure (16) et/ou la bague extérieure (18) du suscepteur est constituée de façon elliptique ou circulaire.

4. Dispositif selon une des revendications précédentes, **caractérisé en ce que** aussi bien la bague intérieure (16) que la bague extérieure (18) présentent respectivement une section transversale d'un rectangle posé de chant, la hauteur étant comprise entre 20 et 120 % du diamètre de la bague, de préférence entre 50 et 85 % et en particulier entre 65 et 75 % du diamètre.

5. Dispositif selon une des revendications précédentes, **caractérisé en ce que** la bague intérieure (16) et la bague extérieure (18) définissent un récipient en particulier fermé en tant que chambre de traitement thermique avec un champ de températures hormogène, dans lequel récipient se trouvent le ou les pièces de formage (12, 14) à chauffer, le récipient étant en particulier au moins partiellement perméable au rayonnement micro-ondes.

6. Dispositif selon une des revendications précédentes, **caractérisé en ce que** la bague intérieure (16) et la bague extérieure (18) en tant que suscepteur absorbent le rayonnement micro-ondes et émettent un rayonnement thermique de façon homogène.

7. Dispositif selon une des revendications précédentes, **caractérisé en ce que** la bague intérieure (16) et/ou la bague extérieure (18) forment respectivement un circuit électrique et sont constituées en particulier en tant que semi-conducteur.

8. Dispositif selon la revendication 7, **caractérisé en ce que** le suscepteur est constitué en tant que semi-conducteur et présente à sa surface une couche de protection en dioxyde de silicium qui agit également de façon électriquement isolante.

9. Dispositif selon une des revendications précédentes, **caractérisé en ce que** les éléments de suscepteur annulaires du suscepteur sont isolés électriquement les uns des autres et sont en particulier disposés sur une surface électriquement isolante.

10. Dispositif selon une des revendications précédentes, **caractérisé en ce que** chaque élément de suscepteur présente une hauteur et/ou épaisseur de paroi essentiellement uniforme qui dépasse de plusieurs fois en particulier la hauteur de la pièce de formage (12, 14).

11. Dispositif selon une des revendications précédentes, **caractérisé en ce qu'**au moins un élément de suscepteur est constitué de façon circulairement symétrique et est en particulier supporté en rotation autour de son axe.

12. Dispositif selon une des revendications précédentes, **caractérisé en ce que** l'épaisseur de paroi d'un élément de suscepteur (16, 18) représente entre un soixante-dixième et un quarantième de la longueur d'onde I du rayonnement micro-ondes produit par le générateur de micro-ondes et a en particulier une épaisseur entre 1,8 mm et 2,5 mm.

13. Dispositif selon une des revendications précédentes, **caractérisé en ce que** la hauteur de chaque élément de suscepteur (16, 18) a un diviseur commun avec la longueur d'onde I du générateur de micro-ondes, en particulier est égale à la moitié de I ou au quart de I.

14. Dispositif selon une des revendications précédentes, **caractérisé en ce que** les éléments de suscepteur (16, 18) sont disposés de façon concentrique les uns avec les autres et en particulier sont raccordés les uns aux autres d'un seul tenant.

15. Dispositif selon une des revendications précédentes, **caractérisé en ce que** les éléments de suscepteur (16, 18) sont raccordés les uns aux autres par le biais d'un fond (30) en forme d'arc de cercle ou par le biais de pièces d'espacement et/ou **en ce que**, entre les éléments de suscepteur (16, 18), il est formé un espace (26) en forme d'arc de cercle qui est muni d'un lit de billes, les billes du lit de bille se composant en particulier de dioxyde de zircon fritté de façon compacte et/ou de Al₂/O₃, et/ou **en ce que** l'espace (26) présente des billes creuses, des billes fragmentées, de la poudre ou ce qu'on appelle des flakes.
